# EUROPEAN PATENT APPLICATION

(11) **EP 4 492 702 A1**
(43) Date of publication of application: **15.01.2025**
(21) Application number: 22930885.3
(22) Date of filing: 11.03.2022
(51) Int. Cl.: H04B 7/0413, H04L 27/26, H04W 8/22, H04W 72/04

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); SUN, Weiqi, Beijing 100190 (CN); CHEN, Lan, Beijing 100190 (CN)
(74) Representative: Hoffmann Eitle
(86) International application number: PCT/JP2022/010830
(87) International publication number: WO 2023/170904

(57) **Abstract**

A terminal according to one aspect of the present disclosure includes a receiving section that receives an indication related to uplink (UL) transmission, and a control section that controls the UL transmission using a number of layers greater than four, based on a specific condition. According to one aspect of the present disclosure, UL transmission with the number of layers greater than four can be appropriately controlled.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In Rel-15 NR, uplink (UL) Multi Input Multi Output (MIMO) transmission of up to four layers is supported. In future radio communication systems, in order for a terminal (a user terminal, a User Equipment (UE)) to implement higher spectral efficiency, supporting UL transmission with the number of layers greater than four has been under study.

However, regarding UL transmission with the number of layers greater than four, studies have not yet been carried out on how a network recognizes an antenna configuration of the UE and how the UE is caused to perform the UL transmission. Unless this control is clarified, increase of communication throughput may be prevented.

In view of this, the present disclosure has one object to provide a terminal, a radio communication method, and a base station that can appropriately control UL transmission with the number of layers greater than four.

### Solution to Problem

A terminal according to one aspect of the present disclosure includes a receiving section that receives an indication related to uplink (UL) transmission, and a control section that controls the UL transmission using a number of layers greater than four, based on a specific condition. Advantageous Effects of Invention

According to one aspect of the present disclosure, UL transmission with the number of layers greater than four can be appropriately controlled.

### Brief Description of Drawings

[FIG. 1] FIG. 1A to FIG. 1D are diagrams to show examples of tables of antenna ports to be referred to in a case in which a transform precoder is disabled, DMRS type = 1, and DMRS maximum length = 1 in Rel. 15.
[FIG. 2] FIG. 2A to FIG. 2D are diagrams to show examples of tables of antenna ports to be referred to in a case in which the transform precoder is disabled, DMRS type = 1, and DMRS maximum length = 2 in Rel. 15.
[FIG. 3] FIG. 3A to FIG. 3D are diagrams to show examples of tables of antenna ports to be referred to in a case in which the transform precoder is disabled, DMRS type = 2, and DMRS maximum length = 1 in Rel. 15.
[FIG. 4] FIG. 4A, FIG. 4B are diagrams to show examples of tables of antenna ports to be referred to in a case in which the transform precoder is disabled, DMRS type = 2, and DMRS maximum length = 2 in Rel. 15.
[FIG. 5] FIG. 5A, FIG. 5B are diagrams to show examples of tables of antenna ports to be referred to in a case in which the transform precoder is disabled, DMRS type = 2, and DMRS maximum length = 2 in Rel. 15.
[FIG. 6] FIG. 6A to FIG. 6D are diagrams to show examples of tables of antenna ports to be referred to in a case in which the transform precoder is disabled, DMRS type = 1, and DMRS maximum length = 2.
[FIG. 7] FIG. 7A and FIG. 7B are diagrams to show examples of tables of antenna ports to be referred to in a case in which the transform precoder is disabled, DMRS type = 2, and DMRS maximum length = 1.
[FIG. 8] FIG. 8A to FIG. 8D are diagrams to show examples of tables of antenna ports to be referred to in a case in which the transform precoder is disabled, DMRS type = 2, and DMRS maximum length = 2.
[FIG. 9] FIG. 9 is a flowchart to show an example of processing according to a third embodiment.
[FIG. 10] FIG. 10 is a diagram to show an example of a schematic structure of a radio communication system according to one embodiment.
[FIG. 11] FIG. 11 is a diagram to show an example of a structure of a base station according to one embodiment.
[FIG. 12] FIG. 12 is a diagram to show an example of a structure of a user terminal according to one embodiment.
[FIG. 13] FIG. 13 is a diagram to show an example of a hardware structure of the base station and the user terminal according to one embodiment.
[FIG. 14] FIG. 14 is a diagram to show an example of a vehicle according to one embodiment.

### Description of Embodiments

### (Control of Transmission of SRS and PUSCH)

In Rel-15 NR, a UE may receive information (SRS configuration information, for example, a parameter in an RRC control element "SRS-Config") used for transmission of a reference signal for measurement (for example, a sounding reference signal (SRS)).

Specifically, the UE may receive at least one of information related to one or a plurality of SRS resource sets (SRS resource set information, for example, an RRC control element "SRS-ResourceSet") and information related to one or a plurality of SRS resources (SRS resource information, for example, an RRC control element "SRS-Resource").

One SRS resource set may be related to a certain number of SRS resources (the certain number of SRS resources may be grouped together). Each SRS resource may be identified with an SRS resource indicator (SRI) or an SRS resource ID (Identifier).

The SRS resource set information may include information of an SRS resource set ID (SRS-ResourceSetId), a list of SRS resource IDs (SRS-ResourceId) used in the resource set, an SRS resource type, and usage of the SRS.

Here, the SRS resource type may indicate any one of a periodic SRS (P-SRS), a semi-persistent SRS (SP-SRS), and an aperiodic CSI (Aperiodic SRS (A-SRS)). Note that the UE may periodically (or periodically after activation) transmit the P-SRS and the SP-SRS, and transmit the A-SRS, based on an SRS request of DCI.

The usage (an RRC parameter "usage", an L1 (Layer-1) parameter "SRS-SetUse") may be, for example, beam management (beamManagement), a codebook (CB), a non-codebook (noncodebook (NCB)), antenna switching, or the like. The SRS with the usage of the codebook or the non-codebook may be used for determination of a precoder of codebook-based or non-codebook-based uplink shared channel (Physical Uplink Shared Channel (PUSCH)) transmission based on the SRI.

For example, in a case of codebook-based transmission, the UE may determine the precoder for PUSCH transmission, based on the SRI, a transmitted rank indicator (TRI), and a transmitted precoding matrix indicator (TPMI). In a case of non-codebook-based transmission, the UE may determine the precoder for PUSCH transmission, based on the SRI.

The SRS resource information may include an SRS resource ID (SRS-ResourceId), the number of SRS ports, an SRS port number, transmission Comb, SRS resource mapping (for example, a time and/or frequency resource position, a resource offset, periodicity of resources, the number of repetitions, the number of SRS symbols, an SRS bandwidth, or the like), hopping related information, an SRS resource type, a sequence ID, spatial relation information of the SRS, or the like.

The spatial relation information (for example, an RRC information element "spatialRelationInfo") of the SRS may indicate spatial relation information between a certain reference signal and the SRS. The certain reference signal may be at least one of a synchronization signal/broadcast channel (Synchronization Signal/Physical Broadcast Channel (SS/PBCH)) block, a channel state information reference signal (CSI-RS), and an SRS (for example, another SRS). The SS/PBCH block may be referred to as a synchronization signal block (SSB) .

The spatial relation information of the SRS may include at least one of an SSB index, a CSI-RS resource ID, and an SRS resource ID as an index of the certain reference signal.

Note that, in the present disclosure, an SSB index, an SSB resource ID, and an SSB Resource Indicator (SSBRI) may be interchangeably interpreted. A CSI-RS index, a CSI-RS resource ID, and a CSI-RS Resource Indicator (CRI) may be interchangeably interpreted. An SRS index, an SRS resource ID, and an SRI may be interchangeably interpreted.

The spatial relation information of the SRS may include a serving cell index, a BWP index (BWP ID), or the like corresponding to the certain reference signal.

Regarding a certain SRS resource, when the UE is configured with the spatial relation information related to the SSB or the CSI-RS and the SRS, the UE may transmit the SRS resource by using a spatial domain filter (spatial domain transmission filter) the same as a spatial domain filter (spatial domain reception filter) for reception of the SSB or the CSI-RS. In this case, the UE may assume that a UE receive beam of the SSB or the CSI-RS and a UE transmit beam of the SRS are the same.

Regarding a certain SRS (target SRS) resource, when the UE is configured with the spatial relation information related to another SRS (reference SRS) and the SRS (target SRS), the UE may transmit the target SRS resource by using a spatial domain filter (spatial domain transmission filter) the same as a spatial domain filter (spatial domain transmission filter) for transmission of the reference SRS. In other words, in this case, the UE may assume that a UE transmit beam of the reference SRS and a UE transmit beam of the target SRS are the same.

Based on a value of a certain field (for example, an SRS resource indicator (SRI) field) in DCI (for example, DCI format 0_1), the UE may determine spatial relation of the PUSCH scheduled by the DCI. Specifically, the UE may use, for PUSCH transmission, the spatial relation information (for example, the RRC information element "spatialRelationInfo") of the SRS resource determined based on a value (for example, the SRI) of the certain field.

In Rel-15/16 NR, when codebook-based transmission is used for the PUSCH, the UE may be configured with the SRS resource set having up to two SRS resources with its usage being the codebook by RRC, and one of the up to two SRS resources may be indicated by DCI (the SRI field of 1 bit). A transmit beam of the PUSCH is indicated by the SRI field.

The UE may determine the TPMI and the number of layers (transmission rank) for the PUSCH, based on a "precoding information and number of layers field" (hereinafter also referred to as a precoding information field). The UE may select the precoder from an uplink codebook regarding the same number of ports as the number of SRS ports indicated by a higher layer parameter "nrofSRS-Ports" configured for the SRS resources indicated by the SRI field, based on the TPMI, the number of layers, or the like.

In Rel-15/16 NR, when non-codebook-based transmission is used for the PUSCH, the UE may be configured with the SRS resource set having up to four SRS resources with its usage being the non-codebook by RRC, and one or more of the up to four SRS resources may be indicated by DCI (the SRI field of 2 bits).

The UE may determine the number of layers (transmission rank) for the PUSCH, based on the SRI field. For example, the UE may determine that the number of SRS resources indicated by the SRI field is the same as the number of layers for the PUSCH. The UE may calculate the precoder of the SRS resources.

When the CSI-RS (which may be referred to as an associated CSI-RS) related to the SRS resources (or the SRS resource set to which the SRS resources belong) is configured in a higher layer, the transmit beam of the PUSCH may be calculated based on (measurement of) the related CSI-RS being configured. Otherwise, the transmit beam of the PUSCH may be indicated by the SRI.

Note that the UE may be configured with whether to use codebook-based PUSCH transmission or use non-codebook-based PUSCH transmission by a higher layer parameter "txConfig" indicating a transmission scheme. The parameter may indicate a value of "codebook" or "non-codebook (nonCodebook)".

In the present disclosure, the codebook-based PUSCH (codebook-based PUSCH transmission, codebook-based transmission) may mean the PUSCH of a case in which the UE is configured with "codebook" as the transmission scheme. In the present disclosure, the non-codebook-based PUSCH (non-codebook-based PUSCH transmission, non-codebook-based transmission) may mean the PUSCH of a case in which the UE is configured with "non-codebook" as the transmission scheme.

### (DMRS)

A front-loaded DMRS is a first (first symbol or a symbol near the first symbol) DMRS for earlier demodulation. An additional DMRS can be configured by the RRC, for the sake of a high-speed moving UE or a high modulation and coding scheme (MCS)/rank. A frequency position of the additional DMRS is the same as that of the front-loaded DMRS.

For the time domain, DMRS mapping type A or B is configured. In DMRS mapping type A, DMRS position 1_0 is counted with a symbol index in the slot. 1_0 is configured by an MIB or a parameter (dmrs-TypeA-Position) in a common serving cell configuration (ServingCellConfigCommon). DMRS position 0 (reference point 1) means a first symbol of a slot or each frequency hop. In DMRS mapping type B, DMRS position l_0 is counted with a symbol index in a PDSCH/PUSCH. 1_0 is invariably 0. DMRS position 0 (reference point 1) means a first symbol of a PDSCH/PUSCH or each frequency hop.

The DMRS position is defined by a table in a specification, and is dependent upon duration of the PDSCH/PUSCH. The position of the additional DMRS is fixed.

For the frequency domain, (PDSCH/PUSCH) DMRS configuration type 1 or 2 is configured. DMRS configuration type 1 has a comb structure, and can be applied to both of CP-OFDM (transport precoding = disabled) and DFT-S-OFDM (transport precoding = enabled). DMRS configuration type 2 can be applied only to CP-OFDM.

A single symbol DMRS or a double symbol DMRS is configured.

The single symbol DMRS is normally used (mandatory in Rel. 15). In the single symbol DMRS, the number of additional DMRSs (symbols) is {0, 1, 2, 3}. The single symbol DMRS supports both of a case in which frequency hopping is enabled and a case in which frequency hopping is disabled. If a maximum number (maxLength) in an uplink DMRS configuration (DMRS-UplinkConfig) is not configured, the single symbol DMRS is used.

The double symbol DMRS is used for a larger number of DMRS ports (in particular, MU-MIMO). In the double symbol DMRS, the number of additional DMRSs (symbols) is {0, 1}. The double symbol DMRS supports a case in which frequency hopping is disabled. If a maximum number (maxLength) in the uplink DMRS configuration (DMRS-UplinkConfig) is 2 (len2), whether the single symbol DMRS is used or the double symbol DMRS is used is determined by DCI or a configured grant.

From the above, as configuration patterns in which the DMRS is available, the following combinations are conceivable.
- DMRS configuration type 1, DMRS mapping type A, single symbol DMRS
- DMRS configuration type 1, DMRS mapping type A, double symbol DMRS
- DMRS configuration type 1, DMRS mapping type B, single symbol DMRS
- DMRS configuration type 1, DMRS mapping type B, double symbol DMRS
- DMRS configuration type 2, DMRS mapping type A, single symbol DMRS
- DMRS configuration type 2, DMRS mapping type A, double symbol DMRS
- DMRS configuration type 2, DMRS mapping type B, single symbol DMRS
- DMRS configuration type 2, DMRS mapping type B, double symbol DMRS

A plurality of DMRS ports mapped to the same REs (time and frequency resources) are referred to as a DMRS CDM group.

For DMRS configuration type 1 and the single symbol DMRS, four DMRS ports can be used. In each DMRS CDM group, two DMRS ports are multiplexed using an FD OCC having a length of 2. Among a plurality of DMRS CDM groups (two DMRS CDM groups), two DMRS ports are multiplexed using FDM.

For DMRS configuration type 1 and the double symbol DMRS, eight DMRS ports can be used. In each DMRS CDM group, two DMRS ports are multiplexed using an FD OCC having a length of 2, and two DMRS ports are multiplexed using a TD OCC. Among a plurality of DMRS CDM groups (two DMRS CDM groups), two DMRS ports are multiplexed using FDM.

For DMRS configuration type 2 and the single symbol DMRS, six DMRS ports can be used. In each DMRS CDM group, two DMRS ports are multiplexed using an FD OCC having a length of 2. Among a plurality of DMRS CDM groups (three DMRS CDM groups), three DMRS ports are multiplexed using FDM.

For DMRS configuration type 2 and the double symbol DMRS, 12 DMRS ports can be used. In each DMRS CDM group, two DMRS ports are multiplexed using an FD OCC having a length of 2, and two DMRS ports are multiplexed using a TD OCC. Among a plurality of DMRS CDM groups (three DMRS CDM groups), three DMRS ports are multiplexed using FDM.

Here, although an example of DMRS mapping type B is shown above, the same holds true for DMRS mapping type A.

In parameters for a PDSCH DMRS, DMRS ports 1000 to 1007 can be used for DMRS configuration type 1, and DMRS ports 1000 to 1011 can be used for DMRS configuration type 2.

In parameters for a PUSCH DMRS, DMRS ports 0 to 7 can be used for DMRS configuration type 1, and DMRS ports 0 to 11 can be used for DMRS configuration type 2.

### (Ports of Reference Signal)

For the sake of orthogonalization of the MIMO layers or the like, a reference signal (for example, a demodulation reference signal (DMRS) or a CSI-RS) having a plurality of ports is used.

For example, regarding single user MIMO (SU-MIMO), a different DMRS port/CSI-RS port may be configured for each layer. Regarding multi user MIMO (MU-MIMO), a different DMRS port/CSI-RS port may be configured for each layer in one UE and for each UE.

Note that, when the number of CSI-RS ports having a value larger than the number of layers used for data is used, it is expected that more accurate channel state measurement can be performed based on the CSI-RS, which contributes to improvement of throughput.

In Rel-15 NR, regarding the DMRS having a plurality of ports, through the use of frequency division multiplexing (FDM), a frequency domain orthogonal cover code (FD-OCC), a time domain OCC (TD-OCC), or the like, up to eight ports are supported for a type 1 DMRS (in other words, DMRS configuration type 1), and up to 12 ports are supported for a type 2 DMRS (in other words, DMRS configuration type 2).

In Rel-15 NR, as the FDM, a pattern of transmission frequency having a shape of teeth of a comb (comb-like resource set) is used. As the FD-OCC, a cyclic shift (CS) is used. The TD-OCC can only be applied to the double symbol DMRS.

The OCC according to the present disclosure may be interchangeably interpreted as an orthogonal code, orthogonalization, a cyclic shift, or the like.

Note that the type of the DMRS may be referred to as a DMRS configuration type.

Among the DMRSs, the DMRS that is subjected to resource mapping in the unit of consecutive (adjacent) two symbols may be referred to as the double symbol DMRS, and the DMRS that is subjected to resource mapping in the unit of one symbol may be referred to as the single symbol DMRS.

Both of the DMRSs may be mapped to one or more symbols per slot, according to the length of a data channel. The DMRS that is mapped to a start position of a data symbol may be referred to as the front-loaded DMRS, and the DMRS that is additionally mapped to a position other than the start position may be referred to as the additional DMRS.

In a case of DMRS configuration type 1 and the single symbol DMRS, the Comb and the CS may be used for orthogonalization. For example, up to four antenna ports (APs) may be supported by using two types of Combs and two types of CSs (Comb2 + 2CS).

In a case of DMRS configuration type 1 and the double symbol DMRS, the Comb, the CS, and the TD-OCC may be used for orthogonalization. For example, up to eight APs may be supported by using two types of Combs, two types of CSs, and TD-OCCs ({1, 1} and {1, -1}).

In a case of DMRS configuration type 2 and the single symbol DMRS, the FD-OCC may be used for orthogonalization. For example, up to six APs may be supported by applying the orthogonal code (2-FD-OCC) to two resource elements (REs) adjacent to each other in the frequency direction.

In a case of DMRS configuration type 2 and the double symbol DMRS, the FD-OCC and the TD-OCC may be used for orthogonalization. For example, up to 12 APs may be supported by applying the orthogonal code (2-FD-OCC) to two REs adjacent in the frequency direction and applying the TD-OCC ({1, 1} and {1, -1}) to two REs adjacent in the time direction.

In Rel-15 NR, regarding the CSI-RS having a plurality of ports, through the use of FDM, time division multiplexing (TDM), a frequency domain OCC, a time domain OCC, or the like, up to 32 ports are supported. Regarding orthogonalization of the CSI-RS as well, a method similar to that for the DMRS described above may be applied.

Incidentally, a group of DMRS ports subjected to orthogonalization by means of the FD-OCC/TD-OCC as described above is also referred to as a code division multiplexing (CDM) group.

Different CDM groups are subjected to FDM, and are thus orthogonal to each other. In contrast, in the same CDM group, orthogonality of the applied OCC may be collapsed due to channel change or the like. In this case, when a signal in the same CDM group is received with different received power, the near-far problem is caused, which may lead to a failure in securing orthogonality.

Here, the TD-OCC/FD-OCC of the DMRS according to Rel-15 NR will be described. The DMRS mapped to the resource element (RE) may correspond to a sequence, which is obtained by multiplying a DMRS sequence by a parameter (which may be referred to as a sequence element or the like) w_{f}(k') of the FD-OCC and a parameter (which may be referred to as a sequence element or the like) wₜ(l') of the TD-OCC.

The TD-OCC and the FD-OCC of the DMRS according to Rel-15 NR both correspond to the OCC having a sequence length (which may be referred to as an OCC length) of 2. Thus, a possible value of each of k' and l' in the above is 0 or 1. By multiplying the FD-OCC by the unit of the RE, the DMRS having two ports can be multiplexed by using the same time and frequency resources (two REs). When both of the FD-OCC and the TD-OCC are applied, the DMRS having four ports can be multiplexed by using the same time and frequency resources (four REs) .

The two existing DMRS port tables for the PDSCH described above correspond to DMRS configuration type 1 and type 2, respectively. Note that p represents a number of the antenna port, and Δ represents a parameter for shifting (offsetting) the frequency resource.

For example, to antenna ports 1000 and 1001, {w_{f}(0), w_{f}(1)} = {+1, +1} and {w_{f}(0), w_{f}(1) } = {+1, -1} are respectively applied, so as to be subjected to orthogonalization by using the FD-OCC.

To antenna ports 1000 to 1001 and antenna ports 1002 to 1003 (in a case of type 2, antenna ports 1004 to 1005 as well), Δ of different values is applied, so that FDM is applied. Thus, antenna ports 1000 to 1003 (or 1000 to 1005) corresponding to the single symbol DMRS are subjected to orthogonalization by using the FD-OCC and FDM.

To antenna ports 1000 to 1003 and antenna ports 1004 to 1007 of type 1, {wₜ(0), wₜ(1)} = {+1, +1} and {wₜ(0), wₜ(1)} = {+1, -1} are respectively applied, so as to be subjected to orthogonalization by using the TD-OCC. Thus, antenna ports 1000 to 1007 (or 1000 to 1011) corresponding to the double symbol DMRS are subjected to orthogonalization by using the FD-OCC, the TD-OCC, and FDM.

For only CP-OFDM, for MU-MIMO of the DL/UL (without increasing DMRS overhead), defining a larger number of orthogonal DMRS ports, implementing a common design among DL and UL DMRSs, up to 24 orthogonal DMRS ports, and doubling a maximum number of orthogonal DMRS ports for both of the single symbol DMRS and the double symbol DMRS for each of the applicable DMRS configuration types have been under study.

In Rel. 15, the following case 1 to case 4 can be configured.

### [Case 1] Single symbol DMRS of DMRS configuration type 1

A total number of DMRS ports is 2 (achieved owing to comb/FDM) × 2 (achieved owing to FD OCC) = 4 ports.

### [Case 2] Double symbol DMRS of DMRS configuration type 1

A total number of DMRS ports is 2 (achieved owing to comb/FDM) × 2 (achieved owing to FD OCC) × 2 (achieved owing to TD OCC) = 8 ports.

### [Case 3] Single symbol DMRS of DMRS configuration type 2

A total number of DMRS ports is 3 (achieved owing to FDM) × 2 (achieved owing to FD OCC) = 6 ports.

### [Case 4] Double symbol DMRS of DMRS configuration type 2

A total number of DMRS ports is 3 (achieved owing to comb) × 2 (achieved owing to FD OCC) × 2 (achieved owing to TD OCC) = 12 ports.

In case 1 to case 4 of Rel. 15, mapping between the CDM groups and the DMRS port indices is as follows.

### [Case 1]

Four ports and two CDM groups may be available. For the PUSCH, CDM group #0 may correspond to the DMRS port indices {0, 1}, and CDM group #1 may correspond to the DMRS port indices {2, 3}. For the PDSCH, CDM group #0 may correspond to the DMRS port indices {1000, 1001}, and CDM group #1 may correspond to the DMRS port indices {1002, 1003}.

### [Case 2]

Eight ports and two CDM groups may be available. For the PUSCH, CDM group #0 may correspond to the DMRS port indices {0, 1, 4, 5}, and CDM group #1 may correspond to the DMRS port indices {2, 3, 6, 7}. For the PDSCH, CDM group #0 may correspond to the DMRS port indices {1000, 1001, 1004, 1005}, and CDM group #1 may correspond to the DMRS port indices {1002, 1003, 1006, 1007}.

### [Case 3]

Six ports and three CDM groups may be available. For the PUSCH, CDM group #0 may correspond to the DMRS port indices {0, 1}, CDM group #1 may correspond to the DMRS port indices {2, 3}, and CDM group #2 may correspond to the DMRS port indices {4, 5}. For the PDSCH, CDM group #0 may correspond to the DMRS port indices {1000, 1001}, CDM group #1 may correspond to the DMRS port indices {1002, 1003}, and CDM group #2 may correspond to the DMRS port indices {1004, 1005}.

### [Case 4]

12 ports and three CDM groups may be available. For the PUSCH, CDM group #0 may correspond to the DMRS port indices {0, 1, 6, 7}, CDM group #1 may correspond to the DMRS port indices {2, 3, 8, 9}, and CDM group #2 may correspond to the DMRS port indices {4, 5, 10, 11}. For the PDSCH, CDM group #0 may correspond to the DMRS port indices {1000, 1001, 1006, 1007}, CDM group #1 may correspond to the DMRS port indices {1002, 1003, 1008, 1009}, and CDM group #2 may correspond to the DMRS port indices {1004, 1005, 1010, 1011}.

### <Tables of Antenna Ports in Rel. 15>

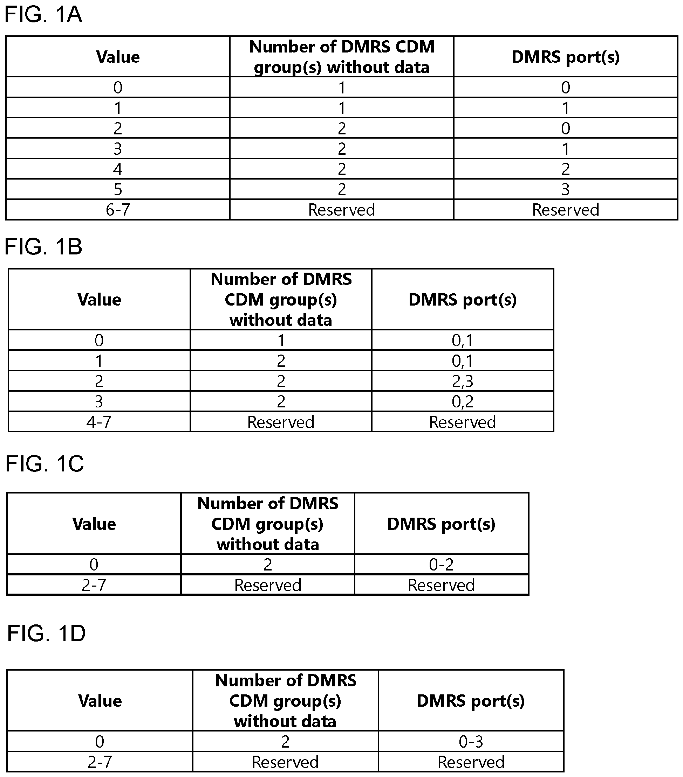

FIG. 1A to FIG. 1D are diagrams to show examples of tables of antenna ports to be referred to in a case in which a transform precoder is disabled, DMRS type = 1, and DMRS maximum length = 1 in Rel. 15.

FIG. 1A is an example of a table of antenna ports corresponding to rank 1. In the present example, different sets of DMRS ports (the number of antenna ports is 1) are associated with antenna port field value = 0 to 5.

FIG. 1B is an example of a table of antenna ports corresponding to rank 2. In the present example, different sets of DMRS ports (the number of antenna ports is 2) are associated with antenna port field value = 0 to 3.

FIG. 1C is an example of a table of antenna ports corresponding to rank 3. In the present example, different sets of DMRS ports (the number of antenna ports is 3) are associated with antenna port field value = 0.

FIG. 1D is an example of a table of antenna ports corresponding to rank 4. In the present example, different sets of DMRS ports (the number of antenna ports is 4) are associated with antenna port field value = 0.

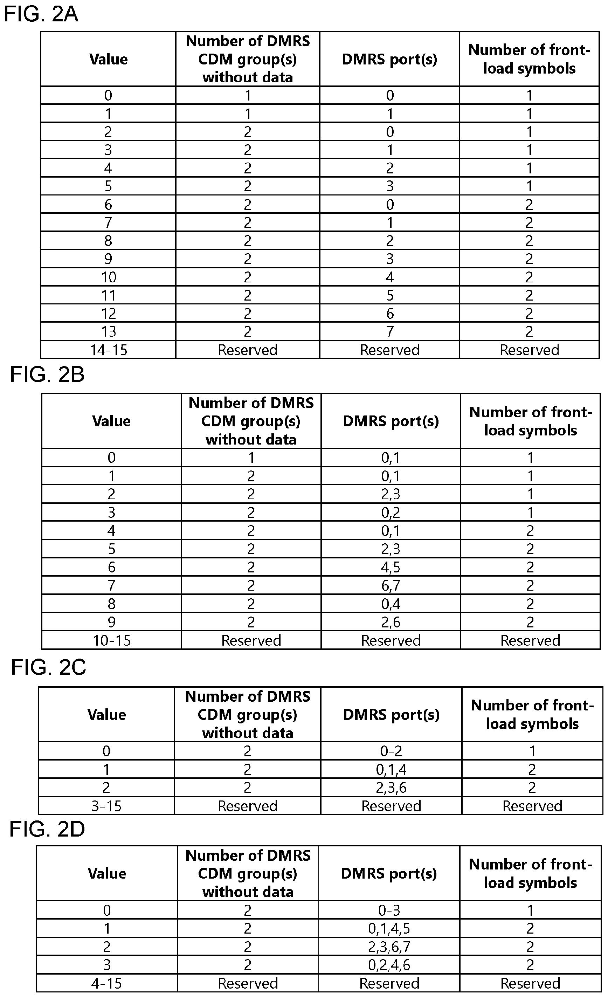

FIG. 2A to FIG. 2D are diagrams to show examples of tables of antenna ports to be referred to in a case in which the transform precoder is disabled, DMRS type = 1, and DMRS maximum length = 2 in Rel. 15.

FIG. 2A is an example of a table of antenna ports corresponding to rank 1. In the present example, different sets of DMRS ports (the number of antenna ports is 1) are associated with antenna port field value = 0 to 13. Note that correspondence between the values and details of the entries is not limited to this. The same holds true for other examples.

FIG. 2B is an example of a table of antenna ports corresponding to rank 2. In the present example, different sets of DMRS ports (the number of antenna ports is 2) are associated with antenna port field value = 0 to 9.

FIG. 2C is an example of a table of antenna ports corresponding to rank 3. In the present example, different sets of DMRS ports (the number of antenna ports is 3) are associated with antenna port field value = 0 to 2.

FIG. 2D is an example of a table of antenna ports corresponding to rank 4. In the present example, different sets of DMRS ports (the number of antenna ports is 4) are associated with antenna port field value = 0 to 3.

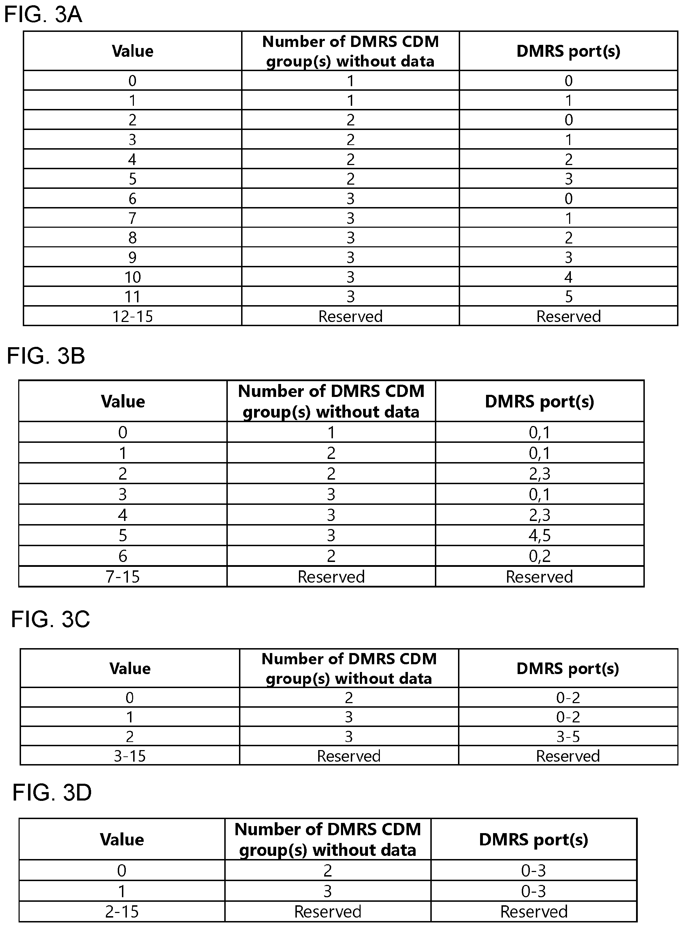

FIG. 3A to FIG. 3D are diagrams to show examples of tables of antenna ports to be referred to in a case in which the transform precoder is disabled, DMRS type = 2, and DMRS maximum length = 1 in Rel. 15.

FIG. 3A is an example of a table of antenna ports corresponding to rank 1. In the present example, different sets of DMRS ports (the number of antenna ports is 1) are associated with antenna port field value = 0 to 11. Note that correspondence between the values and details of the entries is not limited to this. The same holds true for other examples.

FIG. 3B is an example of a table of antenna ports corresponding to rank 2. In the present example, different sets of DMRS ports (the number of antenna ports is 2) are associated with antenna port field value = 0 to 6.

FIG. 3C is an example of a table of antenna ports corresponding to rank 3. In the present example, different sets of DMRS ports (the number of antenna ports is 3) are associated with antenna port field value = 0 to 2.

FIG. 3D is an example of a table of antenna ports corresponding to rank 4. In the present example, different sets of DMRS ports (the number of antenna ports is 4) are associated with antenna port field value = 0 to 1.

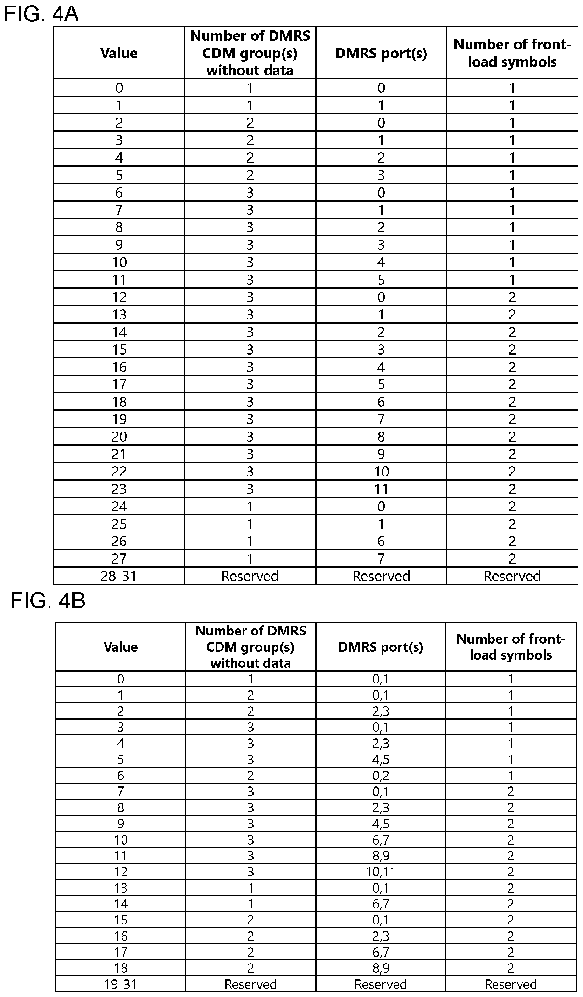

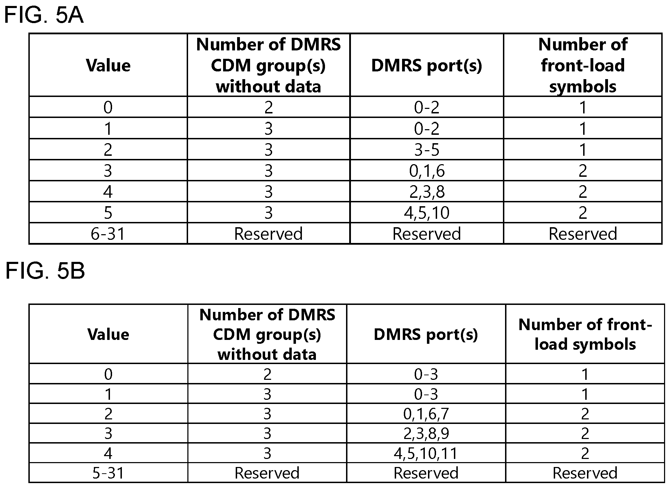

FIG. 4A, FIG. 4B, FIG. 5A, and FIG. 5B are diagrams to show examples of tables of antenna ports to be referred to in a case in which the transform precoder is disabled, DMRS type = 2, and DMRS maximum length = 2 in Rel. 15.

FIG. 4A is an example of a table of antenna ports corresponding to rank 1. In the present example, different sets of DMRS ports (the number of antenna ports is 1) are associated with antenna port field value = 0 to 27.

FIG. 4B is an example of a table of antenna ports corresponding to rank 2. In the present example, different sets of DMRS ports (the number of antenna ports is 2) are associated with antenna port field value = 0 to 18.

FIG. 5A is an example of a table of antenna ports corresponding to rank 3. In the present example, different sets of DMRS ports (the number of antenna ports is 3) are associated with antenna port field value = 0 to 5.

FIG. 5B is an example of a table of antenna ports corresponding to rank 4. In the present example, different sets of DMRS ports (the number of antenna ports is 4) are associated with antenna port field value = 0 to 4.

### <DMRS Ports with Number of Layers Greater than Four Layers>

Examples of tables of antenna ports for a DMRS port indication with the number of layers greater than four layers in a case in which the transform precoder is disabled will be described.

Regarding the codebook-based PUSCH, the UE determines a rank (number of layers) for PUSCH transmission, based on the precoding information field in the DCI. Regarding the non-codebook-based PUSCH, the UE determines a rank (number of layers) for PUSCH transmission, based on the SRS resource indicator field in the DCI.

Then, the UE may determine a table of antenna ports corresponding to the determined rank, based on enabled/disabled of the transform precoder, the DMRS type (which may be configured by the RRC parameter "dmrs-Type") of the PUSCH configured by higher layer signaling, and the value of the DMRS maximum length (which may be configured by the RRC parameter "maxLength").

Depending on the value of the antenna port field in the DCI, entries (the entries correspond to a set of the number of CDM groups, an antenna port index of the DMRS, the number of front-load symbols ("Number of front-load symbols"), and the like) of the table to be referred to may be determined.

### [Case in Which DMRS Type = 1 and DMRS Maximum Length = 1]

In a case in which DMRS type = 1 and DMRS maximum length = 1, transmission of up to rank 4 may be supported. In other words, the UE configured with DMRS type = 1 and DMRS maximum length = 1 need not support transmission of greater than rank 4.

### [Case in Which DMRS Type = 1 and DMRS Maximum Length = 2]

In a case in which DMRS type = 1 and DMRS maximum length = 2, transmission of up to rank 8 may be supported.

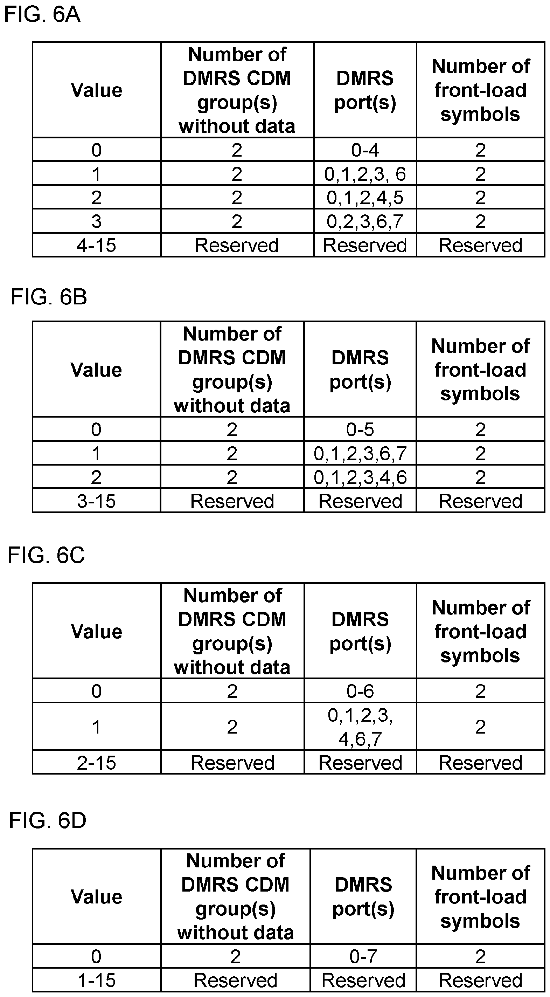

FIG. 6A to FIG. 6D are diagrams to show examples of tables of antenna ports to be referred to in a case in which the transform precoder is disabled, DMRS type = 1, and DMRS maximum length = 2.

FIG. 6A is an example of a table of antenna ports corresponding to rank 5. In the present example, different sets of DMRS ports (the number of antenna ports is 5) are associated with antenna port field value = 0 to 3. Note that correspondence between the values and details of the entries is not limited to this. The same holds true for other examples.

In FIG. 6A, 2+3 layers and 3+2 layers may be supported. Note that only a part of the shown entries may be supported. For example, only the entries of DMRS ports 0 to 4 may be supported for 2+3 layers, and only the entries of DMRS ports 0, 1, 2, 3, and 6 may be supported for 3+2 layers.

FIG. 6B is an example of a table of antenna ports corresponding to rank 6. In the present example, different sets of DMRS ports (the number of antenna ports is 6) are associated with antenna port field value = 0 to 2.

In FIG. 6B, 4+2 layers, 2+4 layers, and 3+3 layers may be supported. Note that only a specific combination of X and Y (for example, 3+3) regarding the X+Y layers may be supported.

FIG. 6C is an example of a table of antenna ports corresponding to rank 7. In the present example, different sets of DMRS ports (the number of antenna ports is 7) are associated with antenna port field value = 0 to 1.

In FIG. 6C, 4+3 layers and 3+4 layers may be supported.

FIG. 6D is an example of a table of antenna ports corresponding to rank 8. In the present example, a set of DMRS ports (the number of antenna ports is 8) is associated with antenna port field value = 0.

In FIG. 6D, only 4+4 layers may be supported.

### [Case in Which DMRS Type = 2 and DMRS Maximum Length = 1]

In a case in which DMRS type = 2 and DMRS maximum length = 1, transmission of up to rank 6 may be supported, only transmission of up to rank 4 may be supported, or only transmission of up to rank 5 may be supported without transmission of rank 6 (for example, 4+2 layers) being supported.

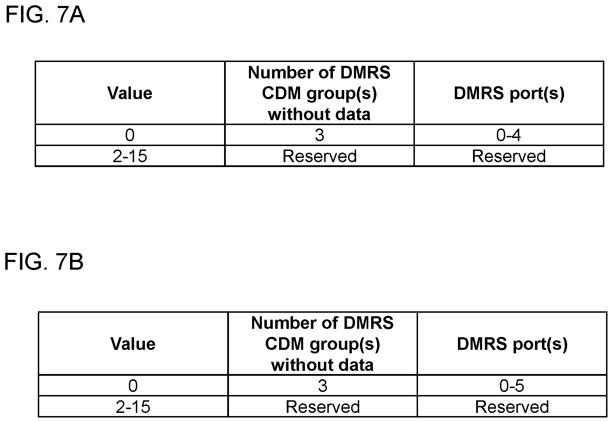

FIG. 7A and FIG. 7B are diagrams to show examples of tables of antenna ports to be referred to in a case in which the transform precoder is disabled, DMRS type = 2, and DMRS maximum length = 1.

FIG. 7A is an example of a table of antenna ports corresponding to rank 5. In the present example, a set of DMRS ports (the number of antenna ports is 5) is associated with antenna port field value = 0.

FIG. 7B is an example of a table of antenna ports corresponding to rank 6. In the present example, a set of DMRS ports (the number of antenna ports is 6) is associated with antenna port field value = 0.

### [Case in Which DMRS Type = 2 and DMRS Maximum Length = 2]

In a case in which DMRS type = 2 and DMRS maximum length = 2, transmission of up to rank 8 may be supported.

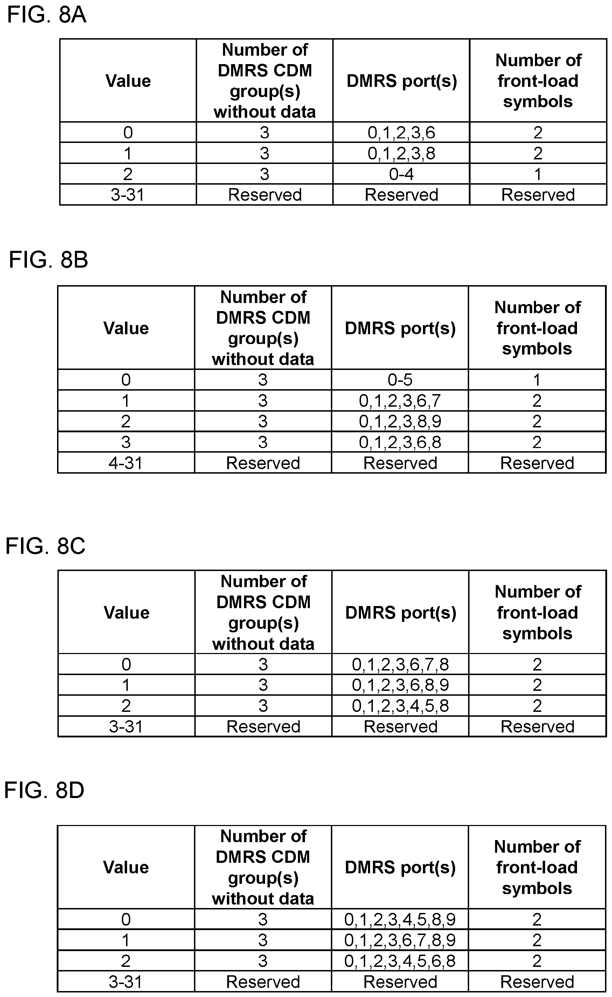

FIG. 8A to FIG. 8D are diagrams to show examples of tables of antenna ports to be referred to in a case in which the transform precoder is disabled, DMRS type = 2, and DMRS maximum length = 2.

FIG. 8A is an example of a table of antenna ports corresponding to rank 5. In the present example, different sets of DMRS ports (the number of antenna ports is 5) are associated with antenna port field value = 0 to 2.

FIG. 8B is an example of a table of antenna ports corresponding to rank 6. In the present example, different sets of DMRS ports (the number of antenna ports is 6) are associated with antenna port field value = 0 to 3.

In FIG. 8B, 4+2 layers, 2+4 layers, and 3+3 layers may be supported. Note that only a specific combination of X and Y (for example, 3+3) regarding the X+Y layers may be supported. For example, only the entries corresponding to antenna port field value = 3 of FIG. 8B may be supported for 3+3.

FIG. 8C is an example of a table of antenna ports corresponding to rank 7. In the present example, different sets of DMRS ports (the number of antenna ports is 7) are associated with antenna port field value = 0 to 2.

FIG. 8D is an example of a table of antenna ports corresponding to rank 8. In the present example, sets of DMRS ports (the number of antenna ports is 8) are associated with antenna port field value = 0 to 2.

Regarding FIG. 8D, only the entries corresponding to 4+4 layers may be supported.

According to the DMRS port indication with the number of layers greater than four layers described above, the antenna ports can be appropriately indicated regarding the PUSCH using the number of layers greater than four when the transform precoder is disabled.

### (Analysis)

However, although the examples of the DMRS ports with the number of layers greater than four layers are described above, studies have not been carried out on the DMRS port indication with the number of layers greater than four layers for two codewords. There is room for further studies on the tables for the DMRS port indication with the number of layers greater than four layers. Full studies have not been carried out on limitations (conditions) on the DMRS configuration for the PUSCH with the number of layers greater than four layers.

Full studies have not been carried out on whether an increased number of DMRS ports is applied to the PUSCH of a high rank (a large number of layers). Unless these studies are fully carried out, UL transmission with the number of layers greater than four cannot be appropriately performed, and communication throughput may be reduced.

In view of this, the inventors of the present invention came up with the idea of a method for appropriately performing UL transmission with the number of layers greater than four.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C".

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, an index, an identifier (ID), an indicator, a resource ID, a number, and the like may be interchangeably interpreted. In the present disclosure, a sequence, a list, a set, a group, a cluster, a subset, and the like may be interchangeably interpreted.

In the present disclosure, description of "Rel. XX" indicates a release of 3GPP. Note that release number "XX" is an example, and may be replaced with another number.

In the present disclosure, a DMRS, a DL DMRS, a UL DMRS, a PDSCH DMRS, and a PUSCH DMRS may be interchangeably interpreted.

In the present disclosure, an orthogonal sequence, an OCC, an FD OCC, and a TD OCC may be interchangeably interpreted.

In the present disclosure, drop, stop, cancel, puncture, rate match, postpone, and the like may be interchangeably interpreted.

In the present disclosure, a DMRS port, an antenna port, a port, and a DMRS port index may be interchangeably interpreted. In the present disclosure, a DMRS CDM group, a CDM group, a DMRS group, and DMRS CDM group(s) without data may be interchangeably interpreted. In the present disclosure, an antenna port indication and an antenna port field may be interchangeably interpreted. In the present disclosure, a DMRS configuration type and a DMRS type may be interchangeably interpreted. In the present disclosure, a DMRS maximum length and the number of symbols of the DMRS may be interchangeably interpreted.

In the present disclosure, a CDM group list and a list may be interchangeably interpreted. In the present disclosure, a CDM group subset and a group subset may be interchangeably interpreted.

In the present disclosure, a rank, a transmission rank, the number of layers, and the number of antenna ports may be interchangeably interpreted. One codeword being applied and the number of layers being equal to or less than four layers may be interchangeably interpreted. Two codewords being applied and the number of layers being greater than four layers may be interchangeably interpreted.

### (Radio Communication Method)

### <First Embodiment>

### [Case in Which Number of Layers Is Equal to or Less than Four Layers]

The tables for indicating the antenna ports for the PUSCH of Rel. 15 shown in FIG. 1 to FIG. 5 can be applied to a case of one codeword (a case in which codeword 0 is enabled, codeword 1 is disabled, and the number of layers is equal to or less than four layers).

When two codewords for multi-panel UL simultaneous transmission are configured, the UE may apply the existing tables for the PUSCH of FIG. 1 to FIG. 5, even if the supported rank is 4 or less.

When two codewords are configured, the UE may apply the existing tables for the PUSCH of FIG. 1 to FIG. 5, if the rank indicated with dynamic scheduling is 4 or less.

### [Case in Which Number of Layers Is Greater than Four]

The UE may receive the antenna port indication (for example, the indication using the antenna port indication tables for the PUSCH shown in FIG. 6 to FIG. 8) when at least one of the DMRS type and the DMRS maximum length is not 1, and control UL transmission (transmit the UL) using two codewords (codeword 0 and codeword 1), which is UL transmission using the number of layers greater than four, based on the indication.

According to the first embodiment, even when the number of layers is greater than four, UL transmission can be appropriately controlled using the antenna port indication tables for the PUSCH.

### <Second Embodiment>

While the examples of the tables of the antenna ports for the DMRS port indication with the number of layers greater than four layers in a case in which the transform precoder is disabled are described above in FIG. 6 to FIG. 8, entries may be added to cover all possible layer allocations between two codewords. Regarding the number of bits of the antenna port field in the DCI, 4 bits may be used in FIG. 6 and FIG. 7, and 5 bits may be used in FIG. 8. The same may hold true for the present embodiment regarding the number of bits. In the present disclosure, the DMRS CDM group may be interpreted as DMRS CDM group(s) without data.

### [Addition of Entry in Case 2]

In case 2 (DMRS type = 1 and DMRS maximum length = 2), the UE may control UL (for example, PUSCH) transmission so that the sum of the number of DMRS port indices corresponding to a first DMRS CDM group and the number of DMRS port indices corresponding to a second DMRS CDM group equals the number of ranks.

### [[Rank 5]]

An entry based on at least one of the following principles may be further added to FIG. 6A corresponding to rank 5 to which case 2 is applied as the DMRS configuration.

(1) Four DMRS port indices corresponding to DMRS CDM group #0 and one DMRS port index corresponding to DMRS CDM group #1 are included.
(2) One DMRS port index corresponding to DMRS CDM group #0 and four DMRS port indices corresponding to DMRS CDM group #1 are included.
(3) Three DMRS port indices corresponding to DMRS CDM group #0 and two DMRS port indices corresponding to DMRS CDM group #1 are included.
(4) Two DMRS port indices corresponding to DMRS CDM group #0 and three DMRS port indices corresponding to DMRS CDM group #1 are included.

### [[Rank 6]]

An entry based on at least one of the following principles may be further added to FIG. 6B corresponding to rank 6 to which case 2 is applied as the DMRS configuration. The example of FIG. 6B is an example corresponding to the following principles.

(1) Four DMRS port indices corresponding to DMRS CDM group #0 and two DMRS port indices corresponding to DMRS CDM group #1 are included.
(2) Two DMRS port indices corresponding to DMRS CDM group #0 and four DMRS port indices corresponding to DMRS CDM group #1 are included.
(3) Three DMRS port indices corresponding to DMRS CDM group #0 and three DMRS port indices corresponding to DMRS CDM group #1 are included.

### [[Rank 7]]

An entry based on at least one of the following principles may be further added to FIG. 6C corresponding to rank 7 to which case 2 is applied as the DMRS configuration. The example of FIG. 6C is an example corresponding to the following principles.

(1) Four DMRS port indices corresponding to DMRS CDM group #0 and three DMRS port indices corresponding to DMRS CDM group #1 are included.
(2) Three DMRS port indices corresponding to DMRS CDM group #0 and four DMRS port indices corresponding to DMRS CDM group #1 are included.

### [[Rank 8]]

An entry based on at least one of the following principles may be further added to FIG. 6D corresponding to rank 8 to which case 2 is applied as the DMRS configuration. The example of FIG. 6D is an example corresponding to the following principles.

(1) Four DMRS port indices corresponding to DMRS CDM group #0 and four DMRS port indices corresponding to DMRS CDM group #1 are included.

### [Addition of Entry in Case 3]

In case 3 (DMRS type = 2 and DMRS maximum length = 1), the UE may control UL (for example, PUSCH) transmission so that the sum of the number of DMRS port indices corresponding to a first DMRS CDM group, the number of DMRS port indices corresponding to a second DMRS CDM group, and the number of DMRS port indices corresponding to a third DMRS CDM group equals the number of ranks.

### [[Rank 5]]

An entry based on the following principles may be further added to FIG. 7A corresponding to rank 5 to which case 3 is applied as the DMRS configuration.

In other words, in the example of FIG. 7A, four DMRS port indices corresponding to two DMRS CDM groups and one DMRS port index corresponding to one DMRS CDM group may be included.

(1) Two DMRS port indices corresponding to DMRS CDM group #0, two DMRS port indices corresponding to DMRS CDM group #1, and one DMRS port index corresponding to DMRS CDM group #2 are included.
(2) Two DMRS port indices corresponding to DMRS CDM group #1, two DMRS port indices corresponding to DMRS CDM group #2, and one DMRS port index corresponding to DMRS CDM group #0 are included.

### [[Rank 6]]

An entry based on the principle that six DMRS port indices corresponding to three DMRS CDM groups are included may be further added to FIG. 7B corresponding to rank 6 to which case 3 is applied as the DMRS configuration. The example of FIG. 7B is an example corresponding to the following principles.

### [Addition of Entry in Case 4]

In case 4 (DMRS type = 2 and DMRS maximum length = 2), the UE may control UL (for example, PUSCH) transmission so that the sum of the number of DMRS port indices corresponding to a first DMRS CDM group, the number of DMRS port indices corresponding to a second DMRS CDM group, and the number of DMRS port indices corresponding to a third DMRS CDM group equals the number of ranks.

### [[Rank 5]]

An entry based on the following principles may be further added to FIG. 8A corresponding to rank 5 to which case 4 (DMRS type = 2 and DMRS maximum length = 2) is applied as the DMRS configuration.

(1) Four DMRS port indices corresponding to one DMRS CDM group and one DMRS port index corresponding to another DMRS CDM group are included.
(2) Three DMRS port indices corresponding to one DMRS CDM group and two DMRS port indices corresponding to another DMRS CDM group are included.
(3) Two DMRS port indices corresponding to one (first) DMRS CDM group, two DMRS port indices corresponding to another (second) DMRS CDM group, and one DMRS port index corresponding to another (third) DMRS CDM group are included.
(4) Three DMRS port indices corresponding to one (first) DMRS CDM group, one DMRS port index corresponding to another (second) DMRS CDM group, and one DMRS port index corresponding to another (third) DMRS CDM group are included.

### [[Rank 6]]

An entry based on the following principles may be further added to FIG. 8B corresponding to rank 6 to which case 4 (DMRS type = 2 and DMRS maximum length = 2) is applied as the DMRS configuration.

(1) Four DMRS port indices corresponding to one DMRS CDM group and two DMRS port indices corresponding to another DMRS CDM group are included.
(2) Three DMRS port indices corresponding to one DMRS CDM group and three DMRS port indices corresponding to another DMRS CDM group are included.
(3) Two DMRS port indices corresponding to one (first) DMRS CDM group, two DMRS port indices corresponding to another (second) DMRS CDM group, and two DMRS port indices corresponding to another (third) DMRS CDM group are included.
(4) Three DMRS port indices corresponding to one (first) DMRS CDM group, two DMRS port indices corresponding to another (second) DMRS CDM group, and one DMRS port index corresponding to another (third) DMRS CDM group are included.
(5) Four DMRS port indices corresponding to one (first) DMRS CDM group, one DMRS port index corresponding to another (second) DMRS CDM group, and one DMRS port index corresponding to another (third) DMRS CDM group are included.

### [[Rank 7]]

An entry based on the following principles may be further added to FIG. 8C corresponding to rank 7 to which case 4 (DMRS type = 2 and DMRS maximum length = 2) is applied as the DMRS configuration.

(1) Four DMRS port indices corresponding to one DMRS CDM group and three DMRS port indices corresponding to another DMRS CDM group are included.
(2) Four DMRS port indices corresponding to one (first) DMRS CDM group, two DMRS port indices corresponding to another (second) DMRS CDM group, and one DMRS port index corresponding to another (third) DMRS CDM group are included.
(3) Three DMRS port indices corresponding to one (first) DMRS CDM group, three DMRS port indices corresponding to another (second) DMRS CDM group, and one DMRS port index corresponding to another (third) DMRS CDM group are included.
(4) Three DMRS port indices corresponding to one (first) DMRS CDM group, two DMRS port indices corresponding to another (second) DMRS CDM group, and two DMRS port indices corresponding to another (third) DMRS CDM group are included.

### [[Rank 8]]

An entry based on the following principles may be further added to FIG. 8D corresponding to rank 8 to which case 4 (DMRS type = 2 and DMRS maximum length = 2) is applied as the DMRS configuration.
(1) Four DMRS port indices corresponding to one DMRS CDM group and four DMRS port indices corresponding to another DMRS CDM group are included.
(2) Four DMRS port indices corresponding to one (first) DMRS CDM group, three DMRS port indices corresponding to another (second) DMRS CDM group, and one DMRS port index corresponding to another (third) DMRS CDM group are included.
(3) Four DMRS port indices corresponding to one (first) DMRS CDM group, two DMRS port indices corresponding to another (second) DMRS CDM group, and two DMRS port indices corresponding to another (third) DMRS CDM group are included.
(4) Three DMRS port indices corresponding to one (first) DMRS CDM group, three DMRS port indices corresponding to another (second) DMRS CDM group, and two DMRS port indices corresponding to another (third) DMRS CDM group are included.

According to the second embodiment, even when at least one of the DMRS type and the DMRS maximum length is not 1, UL transmission can be appropriately controlled using the antenna port indication tables for the PUSCH.

### <Third Embodiment>

The UE may receive an indication (for example, the antenna port indication) related to UL (for example, PUSCH) transmission, and transmit UL transmission using the number of layers greater than four, based on at least one of the following conditions. For example, when at least one of the following conditions is satisfied, the UE may be configured/indicated with UL transmission using the number of layers greater than four, whereas when at least one of the following conditions is not satisfied, the UE need not be configured/indicated with UL transmission using the number of layers greater than four. When at least one of the following conditions is satisfied, UL transmission using the number of layers greater than four may be performed, whereas when at least one of the following conditions is not satisfied, UL transmission using the number of layers greater than four may be dropped. The following conditions may be defined in a specification in advance, or may be limited/configured depending on a corresponding UE capability report.

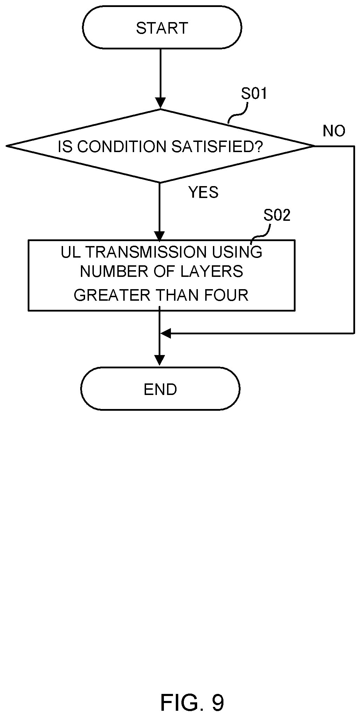

FIG. 9 is a flowchart to show an example of processing according to a third embodiment. When a condition (for example, at least one of the following conditions) is satisfied (YES in Step S01), the UE performs UL transmission using the number of layers greater than four (Step S02). In this case, prior to Step S02, the UE may receive a configuration/indication related to the UL transmission using the number of layers greater than four.
[Condition 1] A UE including six transmit antennas (6TX) or eight transmit antennas (8TX) (a codebook configuration for 6TX UL or 8TX UL). The UE may report the PUSCH (codebook-based/non-codebook-based)/the number of transmit antennas for the SRS (at least one of six and eight) as a UE capability.
[Condition 2] A configured UL rank maximum value is greater than four. In this case, the number of transmit antennas may be configured in higher layer signaling (for example, a PUSCH configuration (PUSCH Config)/SRS configuration (SRS Config) of RRC information elements). In a case of being configured in the SRS configuration, the configuration may be performed for each SRS resource/SRS resource set.
[Condition 3] A specific UL DCI format (e.g., DCI format 0_1/0_2) is applied. For example, the PUSCH with greater than four layers can be configured only for DCI format 0_1 (or 0_2), and need not be supported for DCI format 0_2 (or 0_1). Regarding the PUSCH with greater than four layers, different configurations may be performed for DCI format 0 1 and DCI format 0_2.
[Condition 4] Dynamic scheduling (scheduling using DCI) or a configured grant is applied. For example, the PUSCH with greater than four layers can be configured only for dynamic scheduling, and need not be supported for the configured grant. A configuration different from dynamic scheduling may be configured for each PUSCH of the configured grant.
[Condition 5] Transmission of a specific type of PUSCH (e.g., a message 3/message A PUSCH, a message 3/message A PUSCH in contention based random access (CBRA) or contention free random access (CFRA), a PUSCH triggered for a specific purpose, or the like) is performed. The specific purpose may be transmission of UCI (HARQ-ACK/CSI/SR), for example. For example, in the message 3/message A PUSCH (PUSCH scheduled by a Random Access Response (RAR) UL grant), the number of layers greater than four layers need not be supported.
[Condition 6] PUSCH repetition is configured. For example, repetition transmission cannot be configured (or can be configured) for the PUSCH with greater than four layers.
[Condition 7] Multi-panel UL simultaneous transmission is (or is not) supported/enabled/configured/scheduled. For example, to have transmitted (or to not have transmitted) UE capability information indicating support of multi-panel UL simultaneous transmission may be a condition. For example, when UL simultaneous transmission is configured/scheduled, the PUSCH with greater than four layers need not be supported.

According to the third embodiment, UL (for example, PUSCH) transmission using the number of layers greater than four can be appropriately limited/configured using the above conditions.

### <Fourth Embodiment>

As described above, a total number of DMRS ports in Rel. 15 is 4 ports in case 1, 8 ports in case 2, 6 ports in case 3, and 12 ports in case 4. In future radio communication systems (for example, Rel. 18 or later versions), for example, the number may be increased to 8 ports in case 1, 16 ports in case 2, 12 ports in case 3, and 24 ports in case 4. These numbers of ports may each be hereinafter referred to as an "increased number of DMRS ports". Note that the increased number of DMRS ports is not limited to the above examples. In the present disclosure, a DMRS port, a DMRS port number, and the number of DMRS ports may be interchangeably interpreted.

The UE may receive a configuration related to the number of DMRS ports being different depending on at least one of the number of layers (options 1 and 3) and a UE capability (option 2), and control UL transmission (for example, the PUSCH), based on the configuration.

[Option 1] A configuration related to the increased number of DMRS ports need not be applicable to the UL PUSCH with greater than four layers. In other words, simultaneous configuration of two configurations (the configuration of the number of DMRS ports in Rel. 15 described above and the configuration of the increased number of DMRS ports) for the UE may be impracticable. The configuration related to the increased number of DMRS ports may be configurable only for the UL PUSCH with four layers or less.
[Option 2] The configuration related to the increased number of DMRS ports may be applicable to the UL PUSCH with greater than four layers depending on a UE capability (a UE capability information report). In other words, two configurations (the configuration of the DMRS ports in Rel. 15 described above and the configuration of the increased number of DMRS ports) may be simultaneously configured for the UE.
[Option 3] The configuration related to the increased number of DMRS ports may be applicable only to case 1/case 3 in which the maximum number of layers is six or eight layers. In other words, only when case 1/case 3 is configured for the UE, the configuration related to the increased number of DMRS ports may be performed. In case 2/case 4/case 3, the existing maximum number of ports can sufficiently support six or eight layers, and thus the configuration related to the increased DMRS ports need not be performed.

The increased number of DMRS ports for the UL with greater than four layers may be applied only when at least one of the conditions described in the third embodiment is satisfied, or may be applied based on another condition limited/configured depending on a corresponding UE capability report.

According to the fourth embodiment, the UE can appropriately limit/configure the configuration related to the increased number of DMRS ports. For example, the UE can be prevented from receiving an unnecessary configuration.

### <Fifth Embodiment>

As will be described in examples 5-1 to 5-3 to be described later, a new concept of CDM group lists may be introduced above the CDM groups.

For example, two lists may be given, and the order of the CDM groups in the existing DMRS port tables (for example, FIG. 1 to FIG. 5) may be reused for the DMRS ports for each list. For a second list, a DMRS port index j in the DMRS port table may mean j+P. Here, P may be the number of DMRS ports in the list (the maximum number of DMRS ports in the list). For the second list, a DMRS CDM group index k in the DMRS port table may mean k+Q. Here, Q may be the number of DMRS CDM groups in the list (the maximum number of DMRS CDM groups in the list).

As will be described in examples 5-4 to 5-6 to be described later, a new concept of CDM group subsets may be introduced under the CDM groups.

For example, the order of the CDM groups in the existing DMRS port tables (for example, FIG. 1 to FIG. 5) may be reused for each group subset. For a second group subset, a DMRS port index j in the DMRS port table may mean j+P. Here, P may be the number of DMRS ports in the group subset (the maximum number of DMRS ports in the group subset). For a first group subset, the DMRS port index j in the DMRS port table may mean j.

The proposals in examples 5-1 to 5-6 to be described later can also be applicable to the antenna port indication tables of ranks 5 to 8. The new antenna port indication tables of ranks 5 to 8 may be interpreted for each list or for each CDM group subset as described above.

### [Example 5-1]

The present embodiment relates to mapping of the CDM groups and the DMRS ports.

A new concept of the CDM group lists may be introduced above the CDM groups. The number of CDM groups and the order of the CDM groups for each CDM group list may conform to those of the existing DMRS port tables. The CDM group list may support at least one of the following case 1-1 to case 1-4.

### [[Case 1-1]]

8 ports may be available. Two CDM group lists may be available. There may be two CDM groups for each CDM group list. There may be two DMRS ports for each CDM group. List #1 may include a CDM group {0, 1}, and list #2 may include a CDM group {2, 3}.

### [[Case 1-2]]

16 ports may be available. Two CDM group lists may be available. There may be two CDM groups for each CDM group list. There may be four DMRS ports for each CDM group. List #1 may include a CDM group {0, 1}, and list #2 may include a CDM group {2, 3}.

### [[Case 1-3]]

12 ports may be available. Two CDM group lists may be available. There may be three CDM groups for each CDM group list. There may be two DMRS ports for each CDM group. List #1 may include a CDM group {0, 1, 2}, and list #2 may include a CDM group {3, 4, 5}.

### [[Case 1-4]]

24 ports may be available. Two CDM group lists may be available. There may be three CDM groups for each CDM group list. There may be four DMRS ports for each CDM group. List #1 may include a CDM group {0, 1, 2}, and list #2 may include a CDM group {3, 4, 5}.

The order of the CDM groups in the existing DMRS port tables may be reused for the DMRS ports for each list. For a second list, a DMRS port index j in the DMRS port table may mean j+P. Here, P may be the number of DMRS ports in the list (the maximum number of DMRS ports in the list). For the second list, a DMRS CDM group index k in the DMRS port table may mean k+Q. Here, Q may be the number of DMRS CDM groups in the list (the maximum number of DMRS CDM groups in the list).

### [Example 5-2]

The present example relates to reuse of the existing antenna port tables for the PUSCH. The present example may assume that example 5-1 is used.

A new field (list indication field) for indicating at least one of whether one list is applied or one list is applied to the PUSCH to be scheduled (the number of lists, the number of lists for rate matching) and a list index may be added to DCI format 0_1/0_2 (for scheduling the PUSCH). For the antenna port indication, the existing antenna port tables may be reused for each list.

When the new field indicates one list, the existing antenna port tables and the DMRS port indices for the antenna port indication may be used. By default, the one list may be a first list. When the new field indicates one list, the UE need not transmit data in REs indicated by DMRS REs in the first list (may perform rate matching around the REs indicated by the DMRS REs in the first list for the PUSCH). When the antenna port field indicates a row with the number x of CDM groups, no transmission of data in the REs indicated by the DMRS REs in the first list may mean rate matching in all of the DMRS ports in x CDM groups in the first list.

Whether or not data is mapped to REs not used for the DMRS may be indicated by DCI (for scheduling the PUSCH/PDSCH) (similarly to the "number of CDM groups without data" in Rel. 15). The number of CDM groups without data may be configured by higher layer signaling.

The number of lists may be configured by higher layer signaling. Other parameters such as the maximum number of DMRS ports and the maximum number of DMRS CDM groups may be configured by higher layer signaling, and the UE may determine the number of lists, based on the parameters.

When one list is indicated, it may mean that a user multiplexed with the UE scheduled with the PUSCH/PDSCH occupies only the DMRS ports in the one list (by default, list #1). The UE may perform rate matching around the DMRS REs in one list. When two lists are indicated, it may mean that a user multiplexed with the UE scheduled with the PUSCH/PDSCH occupies the DMRS ports in the two lists. The UE may perform rate matching around the DMRS REs in the two lists.

When the new field indicates one list, the new field may include a list index. When the new field indicates one list and a list index, the one list may be a list corresponding to the list index.

When the new field indicates two lists (lists #1 and #2), the new field may include a list index.

When the second list is indicated by the list index, the indicated DMRS port index j may be regarded as the DMRS port j+P in the antenna port table. Here, P may be a maximum number of DMRS ports per list (maximum number). The number {1, 2, 3} of DMRS CDM groups without data may indicate the CDM groups in the second list.

When the first list is indicated by the list index, the indicated DMRS port index j may be the DMRS port j in the antenna port table. The number {1, 2, 3} of DMRS CDM groups without data may indicate the CDM groups in the first list.

When the new field indicates two lists, the UE need not transmit data in REs indicated by DMRS REs in the two lists. The UE may conform to one of the following rate matchings 1 and 2.

### [[Rate Matching 1]]

The UE performs rate matching around the DMRS REs in all of the DMRS ports in the two lists.

### [[Rate Matching 2]]

The UE performs rate matching around the DMRS REs in all of the DMRS ports in the first list and certain DMRS ports in the second list. An additional field (a field for the number of CDM groups) for indicating the number of CDM groups in the second list for rate matching may be added (to the DCI). The additional field may be applied only when DMRS RE positions of j-th ports in the two lists are different. When the second list is indicated by the list index, the additional field may be unnecessary, and the UE may conform to the antenna port field for the number of CDM groups for rate matching. When the first list is indicated by the list index, the additional field may be enabled, and the UE may conform to the number of CDM groups indicated for rate matching.

For example, values of the new field may indicate the following.
- Value 00 may indicate one list for rate matching and the antenna port indication (in default list #1) for the DMRS.
- Value 01 may indicate two lists for rate matching and the antenna port indication in list #1 for the DMRS.
- Value 10 may indicate two lists for rate matching and the antenna port indication in list #2 for the DMRS.
- Value 11 may be reserved.

As a variation, also when only one list is indicated, the list index may be necessary. For example, values of the new field may indicate the following.
- Value 00 may indicate one list for rate matching and the antenna port indication in list #1 for the DMRS.
- Value 01 may indicate one list for rate matching and the antenna port indication in list #2 for the DMRS.
- Value 10 may indicate two lists for rate matching and the antenna port indication in list #1 for the DMRS.
- Value 11 may indicate two lists for rate matching and the antenna port indication in list #2 for the DMRS.

### [Example 5-3]

For example, in the example of the existing antenna port table (FIG. 1) for the PUSCH, DMRS configuration type 1, DMRS maximum length = 1, and rank = 1, interpretation of the existing antenna port table may conform to the following.
- In list #1, the numbers 1 and 2 of DMRS CDM groups without data may respectively indicate CDM groups {0} and {0, 1}.
- In list #2, the numbers 1 and 2 of DMRS CDM groups without data may respectively indicate CDM groups {2} and {2, 3} in list #2.
- If two lists are indicated and list #2 is indicated, the port index j may mean the j-th port in list #2. In case 1, the port index j may be index j+P = j+4 in list #2. For list #2, DMRS ports 0, 1, 2, and 3 may be respectively interpreted as DMRS ports 4, 5, 6, and 7.

According to present example 5-3, the DMRS ports can be increased without changing the antenna port table.

### [Example 5-4]

The present example relates to mapping of the CDM groups and the DMRS ports.

A new concept of CDM group subsets (group subsets) may be introduced under the CDM groups. The number of CDM groups and the order of the CDM groups for each CDM group subset may conform to those of the existing DMRS port tables. The CDM group subset may support at least one of the following case 4-1 to case 4-4.

### [[Case 4-1]]

8 ports may be available. Two CDM groups may be available. There may be two group subsets for each CDM group. Four DMRS ports may correspond to each CDM group. Each of group subsets #1 and #2 may correspond to a CDM group {0, 1} .

### [[Case 4-2]]

16 ports may be available. Two CDM groups may be available. There may be two group subsets for each CDM group. Eight DMRS ports may correspond to each CDM group. Each of group subsets #1 and #2 may correspond to a CDM group {0, 1} .

### [[Case 4-3]]

12 ports may be available. Three CDM groups may be available. There may be two group subsets for each CDM group. Four DMRS ports may correspond to each CDM group. Each of group subsets #1 and #2 may correspond to a CDM group {0, 1, 2} .

### [[Case 4-4]]

24 ports may be available. Three CDM groups may be available. There may be two group subsets for each CDM group. Eight DMRS ports may correspond to each CDM group. Each of group subsets #1 and #2 may correspond to a CDM group {0, 1, 2}.

The order of the CDM groups in the existing DMRS port tables may be reused for each group subset. For a second group subset, a DMRS port index j in the DMRS port table may mean j+P. Here, P may be the number of DMRS ports in the group subset (the maximum number of DMRS ports in the group subset). For a first group subset, the DMRS port index j in the DMRS port table may mean j.

### [Example 5-5]

The present example relates to reuse of the existing antenna port tables.

A new field (group subset indication field) for indicating at least one of whether one group subset is applied or one group subset is applied to the PUSCH/PDSCH to be scheduled (the number of group subsets, the number of group subsets for rate matching) and a group subset index may be added to DCI format 0_1/0_2/1_1/1_2 (for scheduling the PUSCH/PDSCH). For the antenna port indication, the existing antenna port tables may be reused for each group subset.

When the new field indicates one group subset, the existing antenna port tables and the DMRS port indices for the antenna port indication may be used. By default, the one group subset may be a first group subset. When the new field indicates one group subset, the UE need not transmit/receive data in REs indicated by DMRS REs in the first group subset (may perform rate matching around the REs indicated by the DMRS REs in the first group subset for the PUSCH/PDSCH). When the antenna port field indicates a row with the number x of CDM groups, no transmission/reception of data in the REs indicated by the DMRS REs in the first group subset may mean rate matching in all of the DMRS ports in x CDM groups in the first group subset.

Whether or not data is mapped to REs not used for the DMRS may be indicated by DCI (for scheduling the PUSCH/PDSCH) (similarly to the "number of CDM groups without data" in Rel. 15). The number of CDM groups without data may be configured by higher layer signaling.

The number of group subsets may be configured by higher layer signaling. Other parameters such as the maximum number of DMRS ports and the maximum number of DMRS CDM groups may be configured by higher layer signaling, and the UE may determine the number of group subsets, based on the parameters.

When one group subset is indicated, it may mean that a user multiplexed with the UE scheduled with the PUSCH/PDSCH occupies only the DMRS ports in the one group subset (by default, group subset #1). The UE may perform rate matching around the DMRS REs in one group subset. When two group subsets are indicated, it may mean that a user multiplexed with the UE scheduled with the PUSCH/PDSCH occupies the DMRS ports in the two group subsets. The UE may perform rate matching around the DMRS REs in the two group subsets.

When the new field indicates one group subset, the new field may include a group subset index. When the new field indicates one group subset and a group subset index, the one group subset may be a group subset corresponding to the group subset index.

When the new field indicates two group subsets (group subsets #1 and #2), the new field may include a group subset index.

When the second group subset is indicated by the group subset index, the indicated DMRS port index j may be regarded as the DMRS port j+P in the antenna port table. Here, P may be a maximum number of DMRS ports per group subset (maximum number). The number {1, 2, 3} of DMRS CDM groups without data may indicate the CDM groups in the second group subset.

When the first group subset is indicated by the group subset index, the indicated DMRS port index j may be the DMRS port j in the antenna port table. The number {1, 2, 3} of DMRS CDM groups without data may indicate the CDM groups in the first group subset.

When the new field indicates two group subsets, the UE need not transmit/receive data in REs indicated by DMRS REs in the two group subsets.

The UE may conform to one of the following rate matchings 1 and 2.

### [[Rate Matching 1]]

The UE performs rate matching around the DMRS REs in all of the DMRS ports in the two group subsets.

### [[Rate Matching 2]]

The UE performs rate matching around the DMRS REs in all of the DMRS ports in the first group subset and certain DMRS ports in the second group subset. An additional field (a field for the number of CDM groups) for indicating the number of CDM groups in the second group subset for rate matching may be added (to the DCI). The additional field may be applied only when DMRS RE positions of j-th ports in the two group subsets are different. When the second group subset is indicated by the group subset index, the additional field may be unnecessary, and the UE may conform to the antenna port field for the number of CDM groups for rate matching. When the first group subset is indicated by the group subset index, the additional field may be enabled, and the UE may conform to the number of CDM groups indicated for rate matching.

For example, values of the new field may indicate the following.
- Value 00 may indicate one group subset for rate matching and the antenna port indication (in default group subset #1) for the DMRS.
- Value 01 may indicate two group subsets for rate matching and the antenna port indication in group subset #1 for the DMRS.
- Value 10 may indicate two group subsets for rate matching and the antenna port indication in group subset #2 for the DMRS.
- Value 11 may be reserved.

As a variation, also when only one group subset is indicated, the group subset index may be necessary. For example, values of the new field may indicate the following.
- Value 00 may indicate one group subset for rate matching and the antenna port indication in group subset #1 for the DMRS.
- Value 01 may indicate one group subset for rate matching and the antenna port indication in group subset #2 for the DMRS.
- Value 10 may indicate two group subsets for rate matching and the antenna port indication in group subset #1 for the DMRS.
- Value 11 may indicate two group subsets for rate matching and the antenna port indication in group subset #2 for the DMRS.

### [Example 5-6]

For example, in the example of the existing antenna port table (FIG. 1) for DMRS configuration type 1 and DMRS maximum length = 1, interpretation of the existing antenna port table may conform to the following.
- The numbers 1 and 2 of DMRS CDM groups without data may respectively indicate CDM groups {0} and {0, 1}.
- In group subset #1, CDM group 0 may correspond to a DMRS port index {0, 1}, and CDM group 1 may correspond to a DMRS port index {2, 3}.
- In group subset #2, CDM group 0 may correspond to a DMRS port index {4, 5}, and CDM group 1 may correspond to a DMRS port index {6, 7}.
- If two group subsets are indicated and group subset #2 is indicated, the port index j may mean the j-th port in group subset #2. The port index j may be index j+P = j+4 in group subset #2. For group subset #2, DMRS ports 0, 1, 2, and 3 may be respectively interpreted as DMRS ports 4, 5, 6, and 7.

According to the present example, the DMRS ports can be increased without changing the antenna port table.

According to the fifth embodiment, by using the lists and the subsets, the DMRS ports can be increased without changing the antenna port table.

### <UE Capability>

The UE may transmit (report) UE capability information indicating whether to support at least one of the examples in the present disclosure to a network (base station). The UE may receive an indication/configuration related to at least one of the examples in the present disclosure (for example, an indication/configuration regarding enabling/disabling), using higher layer signaling/physical layer signaling. The indication/configuration may correspond to the UE capability information that has been transmitted by the UE. At least one of the examples in the present disclosure may be applied only to the UE that has received the indication/configuration, the UE that has transmitted corresponding UE capability information, or the UE that supports a corresponding UE capability.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

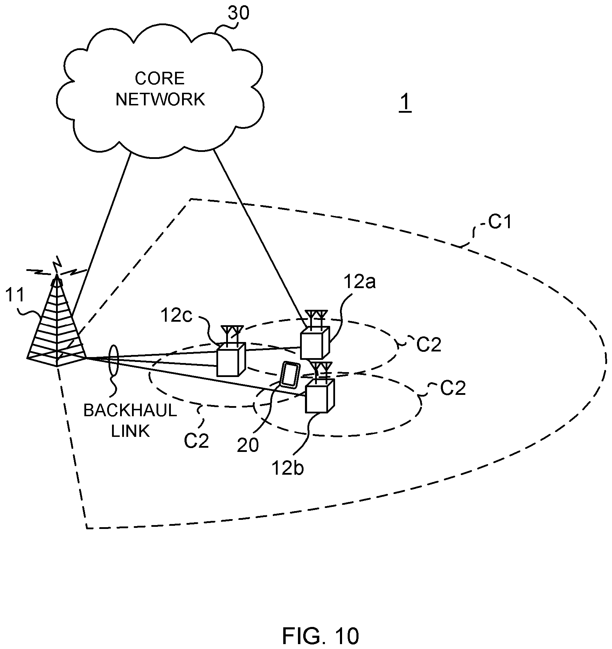

FIG. 10 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, and 5G.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may also be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

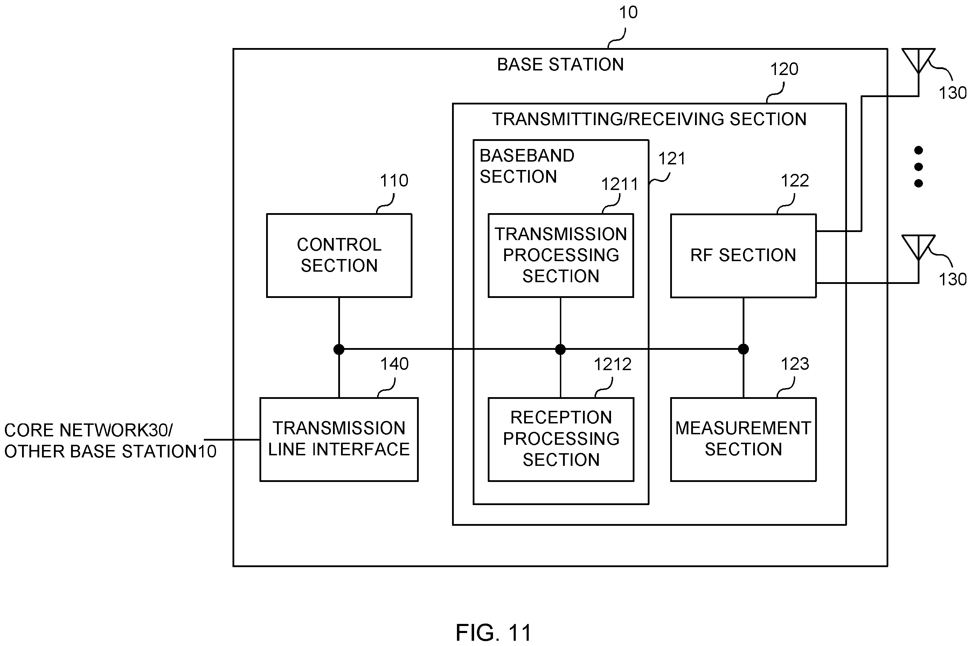

FIG. 11 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the transmitting/receiving section 120 may transmit an antenna port indication when at least one of a demodulation reference signal (DMRS) type and a maximum length of the DMRS to be configured is not 1.

The control section 110 may control reception of uplink (UL) transmission corresponding to two codewords, which is the UL transmission using a number of layers greater than four, the UL transmission being transmitted based on the antenna port indication.

The transmitting/receiving section 120 may transmit an indication related to uplink (UL) transmission. The control section 110 may control reception of the UL transmission using a number of layers greater than four, the UL transmission being transmitted based on a specific condition.

### (User Terminal)

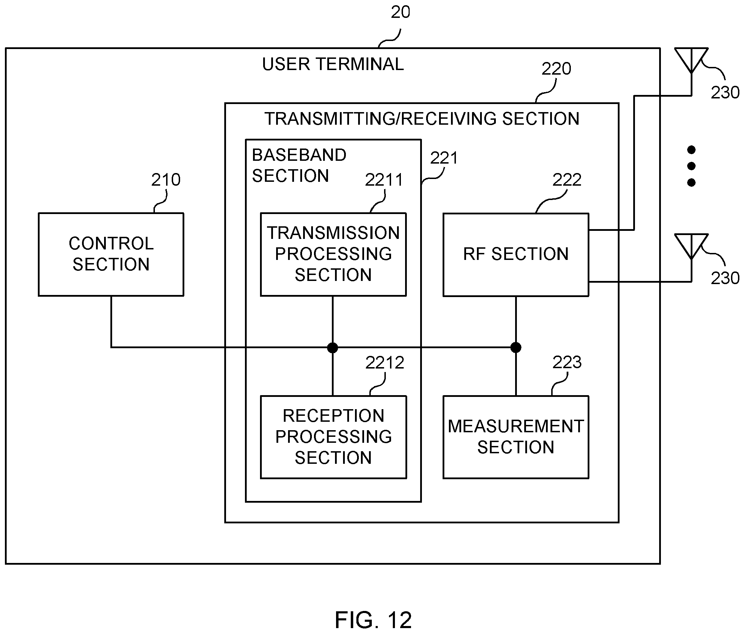

FIG. 12 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive an antenna port indication when at least one of a demodulation reference signal (DMRS) type and a maximum length of the DMRS to be configured is not 1.

The control section 210 may control uplink (UL) transmission corresponding to two codewords, which is the UL transmission using a number of layers greater than four, based on the antenna port indication.

When the DMRS type is 1 and the maximum length of the DMRS is 2, the control section 210 may control the UL transmission so that a sum of a number of DMRS port indices corresponding to a first DMRS CDM group and the number of DMRS port indices corresponding to a second DMRS CDM group equals a number of ranks.

When the DMRS type is 2 and the maximum length of the DMRS is 1, the control section 210 may control the UL transmission so that a sum of a number of DMRS port indices corresponding to a first DMRS CDM group, the number of DMRS port indices corresponding to a second DMRS CDM group, and the number of DMRS port indices corresponding to a third DMRS CDM group equals a number of ranks.

When the DMRS type is 2 and the maximum length of the DMRS is 2, the control section 210 may control the UL transmission so that a sum of a number of DMRS port indices corresponding to a first DMRS CDM group, the number of DMRS port indices corresponding to a second DMRS CDM group, and the number of DMRS port indices corresponding to a third DMRS CDM group equals a number of ranks.

The transmitting/receiving section 220 may receive an indication related to uplink (UL) transmission. The control section 210 may control the UL transmission using a number of layers greater than four, based on a specific condition.

The specific condition may be an indication related to at least one of a number of transmit antennas and a rank. The specific condition may be application of at least one of a specific DCI format, dynamic scheduling, a configured grant, and a specific type of physical uplink shared channel related to the UL transmission.

The transmitting/receiving section 220 may receive a configuration related to a number of demodulation reference signal (DMRS) ports being different depending on at least one of the number of layers and a capability of the terminal. The control section 210 may control the UL transmission, based on the configuration.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

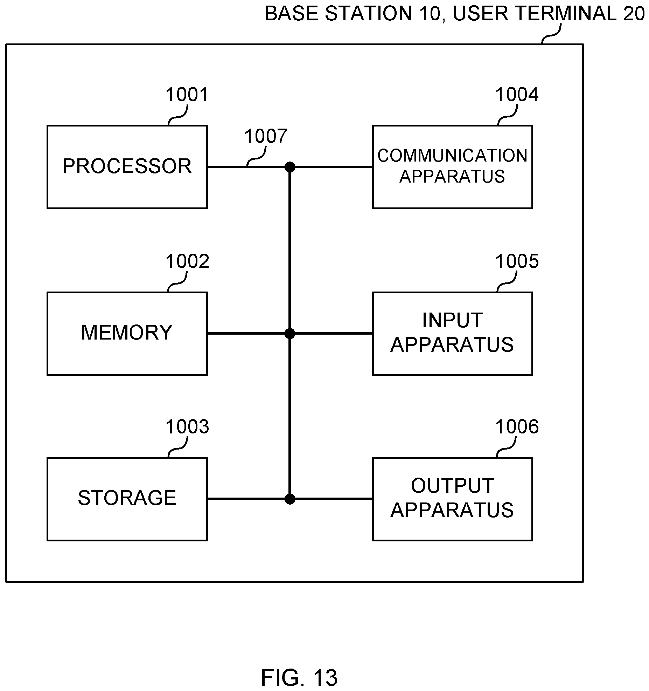

For example, a base station, a user terminal, and so on according to one embodiment of the present disclosure may function as a computer that executes the processes of the radio communication method of the present disclosure. FIG. 13 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs .

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmission power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

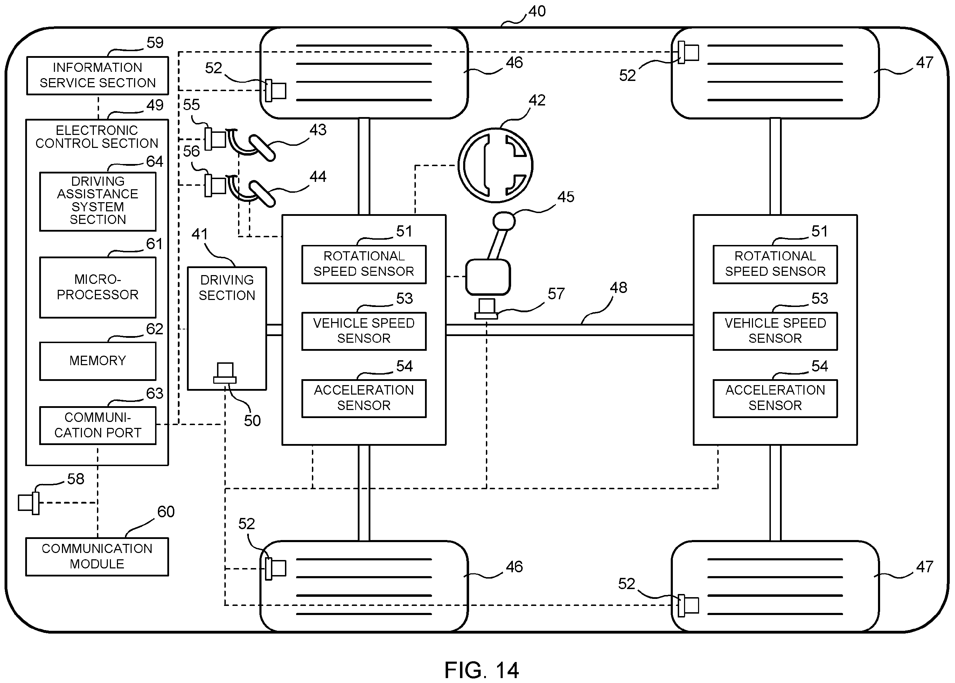

FIG. 14 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives an indication related to uplink (UL) transmission; and
a control section that controls the UL transmission using a number of layers greater than four, based on a specific condition.

2. The terminal according to claim 1, wherein
the specific condition is an indication related to at least one of a number of transmit antennas and a rank.

3. The terminal according to claim 1 or 2, wherein
the specific condition is application of at least one of a specific DCI format, dynamic scheduling, a configured grant, and a specific type of physical uplink shared channel related to the UL transmission.

4. The terminal according to any one of claims 1 to 3, wherein
the receiving section receives a configuration related to a number of demodulation reference signal (DMRS) ports being different depending on at least one of the number of layers and a capability of the terminal, and
the control section controls the UL transmission, based on the configuration.

5. A radio communication method for a terminal, comprising:
receiving an indication related to uplink (UL) transmission; and
controlling the UL transmission using a number of layers greater than four, based on a specific condition.

6. A base station comprising:
a transmitting section that transmits an indication related to uplink (UL) transmission; and
a control section that controls reception of the UL transmission using a number of layers greater than four, the UL transmission being transmitted based on a specific condition.
